# EUROPÄISCHE PATENTSCHRIFT

(11) **EP 0 932 467 B1**
(45) Veröffentlichungstag und Bekanntmachung des Hinweises auf die Patenterteilung: **08.01.2003**
(21) Anmeldenummer: 97912180.3
(22) Anmeldetag: 14.10.1997
(51) Int. Cl.: B23C 3/00, B23C 3/12

(54) **SPANENDES BEARBEITUNGSVERFAHREN VON DREIDIMENSIONALEN VERBINDUNGSFLÄCHEN**
MACHINING METHOD FOR THREE-DIMENSIONAL CONNECTING SURFACES
PROCEDE D'USINAGE DE SURFACES DE LIAISON TRIDIMENSIONNELLES

(30) Priorität: 16.10.1996 CH 253296
(43) Veröffentlichungstag der Anmeldung: 04.08.1999
(73) Patentinhaber: Haberstock, Rolf, D-79790 Küssaberg (DE)
(72) Erfinder: Haberstock, Rolf, D-79790 Küssaberg (DE)
(74) Vertreter: EGLI-EUROPEAN PATENT ATTORNEYS
(86) Internationale Anmeldenummer: EP9705648
(87) Internationale Veröffentlichungsnummer: WO98016340

(56) Entgegenhaltungen:
- DE-A- 3 432 773
- US-A- 3 774 279
- KENNETH B. BOYD: "Five-Axis Machining" MACHINE DESIGN, Bd. 46, Nr. 12, 16.Mai 1974, CLEVELAND US, Seiten 134-138, XP002031560
- G. STUTE UND H. DAMSOHN: "Entwickelungen beim fünfachsigen NC-Fräsen" WERKSTATTSTECHNIK, ZEITSCHRIFT FUR INDUSTRIELLE FERTIGUNG, Bd. 65, Nr. 12, Dezember 1975, BERLIN DE, Seiten 733-736, XP002031561

## Beschreibung

Die Erfindung betrifft ein Verfahren für eine mindestens fünfachsige Werkzeugmaschine, mit dem eine durch feste, geometrische Grössen definierte Verbindungsfläche erzeugbar ist, die mindestens zwei Hauptflächen miteinander verbindet und zumindest zwei Krümmungen in unterschiedliche Richtungen aufweist.

Bei der Herstellung von Werkstücken stellt sich grundsätzlich das Problem, eine Fläche entsprechend ihren Sollwerten abzubilden, beispielsweise in einem CAD-System und nachfolgend die so gewonnenen geometrischen Daten in Fertigungsdaten umzusetzen, ohne dass dabei Informationen verloren gehen. Der Verlust von Information bedeutet regelmässig Einbussen hinsichtlich der Fertigungsgenauigkeit. Die Erzeugung von Flächen eines Werkstückes entsprechend seinen Sollwerten wird umso schwieriger, je komplizierter die mathematische Beschreibung der Werkstückkontur ist. Dies gilt insbesondere für Freiformflächen. Freiformflächen können mathematisch durch Kurvenfamilien in unterschiedliche Raumrichtungen beschrieben werden. Des weiteren ist es möglich, solche nicht in geometrische Grundflächen, wie beispielsweise Kugelflächen oder Paraboloidflächen, aufteilbare Flächen (Freiformflächen), durch Interpolation zwischen vorgegebenen Stützstellen oder Kurven oder durch Approximation mittels Poylgonnetzen zu beschreiben.

Für die Bearbeitung von mehrfach gekrümmten Flächen ist es üblich, stirnseitig kugel- bzw. halbkugelförmig ausgebildete Werkzeuge, wie z.B. Kugelkopffräser, zu verwenden. Mit solchen Werkzeugen ist es möglich, Sollkonturen auch von komplizierten Oberflächen, wie Freiformflächen, zumindest annähernd zu erzeugen. Ist der Radius der Kugelkalotte kleiner als der Radius der entsprechenden Krümmung der Fläche, so kann das Werkzeug der Kontur der Fläche folgen, ohne dass Kollisionsprobleme auftreten, wie dies beispielsweise bei flachen Stirnfräsern durch ein Nachschneiden des Werkzeuges der Fall sein kann. Trotzdem kann dieses Verfahren nicht überzeugen, da einerseits die damit erzielbare Qualität der erzeugten Flächen nicht zufriedenstellt und andererseits relativ viele Verfahrwege notwendig sind.

Diese Nachteile kommen im besonderen Masse zum Tragen, wenn sogenannte "Fillets", insbesondere konvex gekrümmte Fillets, bearbeitet werden. Unter Fillets sind Verbindungsflächen zu verstehen, die jeweils zwischen mindestens zwei Hauptflächen einer Freiformfläche angeordnet sind. Solche Verbindungsflächen können beispielsweise konvex gekrümmte Flächen an Kanten sein, an denen zwei Hauptflächen aneinanderstossen. Um konvexe Fillets zu bearbeiten, ist es üblich, mit einem Stirnfräser, dessen Stirnfläche ebenfalls konvex gekrümmt ist, entlang der Krümmung der Verbindungsfläche zu verfahren. Die einzelnen Bearbeitungsbahnen für die Verbindungsfläche können zwischen einer Ausrichtung quer und einer Ausrichtung längs zur Flächenkurve verlaufen. Um die Verbindungsfläche entlang ihrer gesamten Längserstreckung zu bearbeiten, werden soviele Schnittbahnen nebeneinander gelegt, dass die Summe der Schnittbreiten der einzelnen Bahnen die Verbindungsfläche ergibt.

Bei diesem Verfahren ist zum einen nachteilig, dass aufgrund der gekrümmten Stirnseite des Fräsers Bearbeitungsrillen entstehen, die keinen hohen Anforderungen an die Oberflächenqualität gerecht werden. Zum anderen ist es mit diesem Verfahren schwierig, qualitativ gute Übergänge zwischen der Verbindungsfläche und den daran angrenzenden Hauptflächen zu erzeugen. Um eine zufriedenstellende Oberflächenqualität erzielen zu können, sind deshalb häufig aufwendige und teure Nacharbeiten notwendig.

Aufgrund der Ausrichtung der einzelnen Schnittbahnen quer oder auch schräg zu der Längserstreckung der Verbindungsfläche wird eine relativ hohe Anzahl an einzelnen Schnittbahnen für die Bearbeitung der Verbindungsfläche notwendig. Aus der Summe dieser Schnittbahnen sowie aus der Anzahl der dadurch bedingten Leerverfahrwege ergibt sich ausserdem ein, im Verhältnis zur Grösse der zu bearbeitenden Fläche, sehr langer Gesamtverfahrweg des Werkzeuges. Durch lange Gesamtverfahrwege ergeben sich jedoch lange Bearbeitungszeiten, die wiederum zu hohen Kosten für die Herstellung solcher Teile führen.

Im Hinblick auf vorbekannte Verfahren besteht deshalb die Aufgabe der vorliegenden Erfindung darin, ein Verfahren zu schaffen, mit dem bei der abtragenden Bearbeitung von konvex gekrümmten Verbindungsflächen eine gute Fertigungsqualität bei gleichzeitig geringeren Produktionszeiten erzielbar ist.

Die Aufgabe wird bei einem eingangs erwähnten Verfahren erfindungsgemäss dadurch gelöst, dass ein Werkzeug verwendbar ist, welches eine Mantelfläche aufweist, die mit einer rotationssymmetrischen Kontur versehen ist, an welcher mindestens eine Schneide angeordnet ist. Die Kontur hat in bezug auf einen Längsschnitt entlang der Rotationsachse des Werkzeuges zumindest einen Abschnitt, der zumindest zu einem Abschnitt einer der beiden Krümmungen der Verbindungsflächen kongruent ist. Des weiteren ist das Werkzeug zur Erzeugung der Verbindungsfläche in Richtung einer Längserstreckung der Verbindungsfläche führbar, so dass das Werkzeug mit dem Werkstück in Eingriff steht und die Ausrichtung des Werkzeuges anhand einer von dem Verlauf der Verbindungsfläche abhängigen geometrischen Grösse so erfolgt, daß diese Grösse als im wesentlichen konstant einstellbar ist. Schliesslich ist bei dieser Verfahrbewegung des Werkzeuges eine Tangentialfläche der Kontur des Werkzeuges mit einer Tangentialfläche einer der Hauptflächen identisch. Bevorzugte Ausführungsformen der Erfindung ergeben sich aus den abhängigen Ansprüchen.

Unter Tangentialfläche ist dabei die Fläche zu verstehen, die durch alle Tangenten an der Verbindungs- bzw. Führungsfläche in einem bestimmten Punkt gebildet wird.

Dieses Verfahren unterscheidet sich schon alleine aufgrund des Verlaufs der Schnittbahn in bezug auf die Längserstreckung der Verbindungsfläche (Fillet) von herkömmlichen Verfahren. Durch das erfindungsgemässe Verfahren kann die Anzahl der einzelnen Bahnen des Werkzeuges und damit auch die Anzal der zeitintensiven Richtungswechsel des Werkzeuges erheblich reduziert werden. Da bei dem erfindungsgemässen Verfahren vorgesehen ist, bei jeder Schnittbahn das Werkstück mit der Mantelfläche des Werkzeuges flächig zu bearbeiten, können nachteilige Schnittbedingungen, wie sie beim Einsatz der Stirnfläche eines Fräswerkzeuges auftreten, vermieden werden. Im Schnittpunkt der Werkzeugachse mit der Stirnfläche des Werkzeuges herrscht nämlich die ungünstige Schnittgeschwindigkeit v = 0. An dieser Stelle findet somit kein Schneiden, sondern vielmehr ein Verdrängen des Werkstoffes statt. Auch dies kann zu nicht zufriedenstellenden Oberflächenqualitäten beitragen. Gemäss der vorliegenden Erfindung kommt jedoch die Mantelfläche eines Werkzeuges, insbesondere eines Formfräsers, als Schneidfläche zum Einsatz, wodurch sichergestellt werden kann, dass jeder Punkt der Schneidfläche einen von Null verschiedenen Abstand zur Werkzeugachse aufweist. Dadurch können die zuvor beschriebenen ungünstigen Schnittbedingungen vermieden werden.

Mit dem erfindungsgemässer. Verfahren ist es aber nicht nur möglich, die Gesamtverfahrwege zu verkürzen und die Oberflächenqualität zu verbessern. Da bei dem Verfahren Formwerkzeuge verwendbar sind, können zudem auch Oberflächen mit sehr geringen Toleranzen erzeugt werden.

Zwar ist es aus dem Stand der Technik auch seit langem bekannt, mit Hilfe von Formfräsern Kanten eines Werkstückes zu bearbeiten. Dieses vorbekannte Verfahren wird aber ausschliesslich bei Verbindungsflächen eingesetzt, bei denen die Fräserbahn lediglich in einer (planen) Ebene verläuft, die senkrecht zur Werkeugachse liegt. Ein derartiges Verfahren geht beispielsweise aus der US-PS 3,774,279 hervor.

In einer bevorzugten Ausgestaltung des erfindungsgemässen Verfahrens ist vorgesehen, dass die geometrische Grösse ein von der Drehachse des Werkzeuges mit einem Normalenvektor der Verbindungsfläche eingeschlossener räumlicher Winkel ist. Da mit diesem Verfahren stetige Übergänge zwischen der Verbindungsfläche und einer Hauptfläche geschaffen werden sollen, eignen sich Normalenvektoren und die damit definierten Tangentialflächen besonders gut als geometrische Grösse, anhand der die Ausrichtung der Rotationsachse des Werkzeuges erfolgt.

Im Zusammenhang mit der vorliegenden Verbindung ist "stetig" entsprechend der mathematischen Definition für "Stetigkeit" zu verstehen. Vereinfacht ausgedrückt, bedeutet somit "stetig", dass die Steigung an der betrachteten Stelle stets identisch ist, gleich von welcher Seite man sich dieser Stelle der Verbindungsfläche nähert.

Die Erfindung wird im folgenden anhand von in den Figuren schematisch dargestellten Ausführungsbeispielen näher erläutert; es zeigen:
- Fig. 1: eine perspektivische Schnittdarstellung eines Teils eines von einem Werkzeug mit dem erfindungsgemässen Verfahren bereits hergestellten Werkstückes,
- Fig. 2: ein in einem Längsschnitt entlang seiner Achse teilweise dargestelltes Werkzeug gemäss Fig. 1,
- Fig. 3: einen Ausschnitt einer Vorderansicht des in Fig. 1 gezeigten Werkstückes und Werkzeuges,
- Fig.4: eine Darstellung gemäss Fig. 3, bei der sich das Werkzeug auf einer anderen Schnittbahn befindet.
- Fig. 5: eine Darstellung gemäss Fig.1, in der die erfindungsgemässe Bearbeitung eines weiteren Werkstückes dargestellt ist,
- Fig. 6: eine teilweise dargestellte Schnittansicht der erfindungsgemässen Bearbeitung einer weiteren Verbindungsfläche,
- Fig. 7: eine Draufsicht auf das Werkstück und Werkzeug aus Fig. 6.

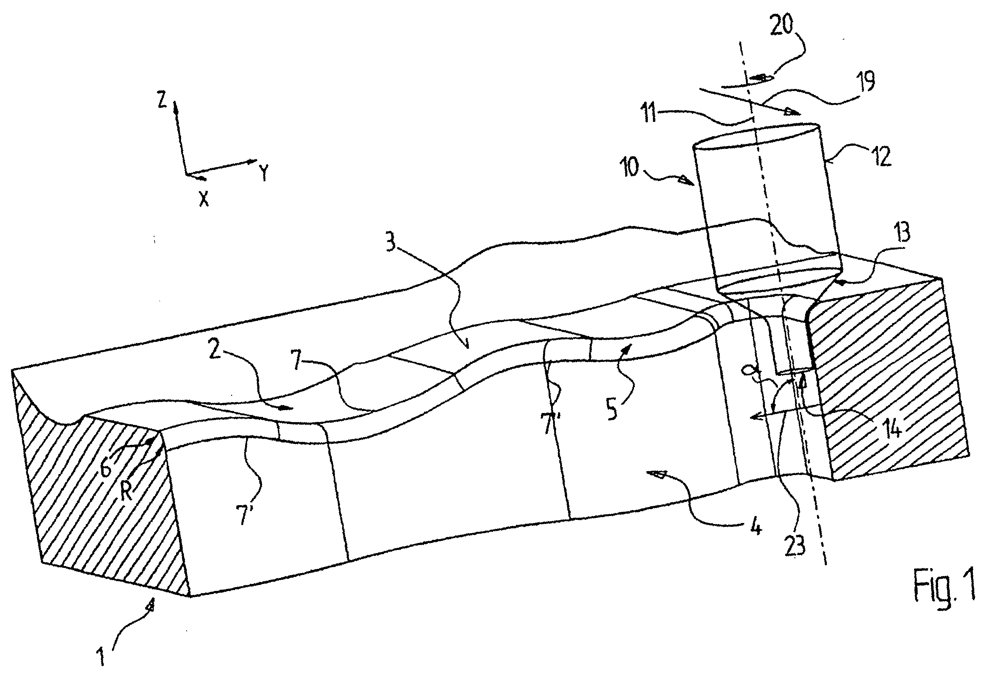

In Fig. 1 ist ein Werkstück 1 gezeigt, dessen Oberfläche eine relativ einfache Freiformfläche 2 aufweist. Die Freiformfläche 2 kann aufgrund ihrer geometrischen Gestaltung in verschiedene Teilflächen unterteilt werden. Diese Unterteilung erfolgt im vorliegenden Fall aufgrund von verhältnismässig einfachen mathematischen Funktionen, mit denen die einzelnen Teilflächen beschrieben werden können. So handelt es sich bei den beiden mit 3 und 4 bezeichneten Hauptflächen um im wesentlichen zweidimensionale Ebenen. Die Hauptfläche 3 hat an einigen Stellen Senken, weshalb diese eine Erstreckung in eine dritte räumliche Dimension aufweist. Eine Verbindungsfläche 5 , welche die beiden Hauptflächen 3, 4 miteinander verbindet, ist mit einer ersten Krümmung 6 versehen, die einem Kreissegment mit dem Radius R entspricht und einen ersten Öffnungswinkel hat. Die Verbindungsfläche 5 ist entlang ihrer gesamten Längserstreckung mit dieser Krümmung 6 versehen und geht tangential bzw. stetig in die jeweils angrenzende Hauptfläche 3, 4 über. Die Verbindungsfläche 5 ist des weiteren mit einer zweiten Krümmung 7 versehen, die sich im Bereich einer der Senken der Hauptfläche 3 befindet.

In Fig. 1 ist ausserdem ein als Formfräser 10 ausgebildetes Werkzeug dargestellt, das sich an einer nicht näher gezeigten fünfachsigen Werkzeugmaschine befindet. Der Fräser 10 ist in bezug auf seine Rotationsachse 11 symmetrisch. Eine Mantelfläche 12 des Fräsers 10 weist einen mit einer bestimmten Kontur 13 versehenen Abschnitt auf, an dem sich nicht näher dargestellte Schneiden befinden. Die Stirnfläche 14 des Werkzeuges ist hingegen nicht mit Schneiden versehen.

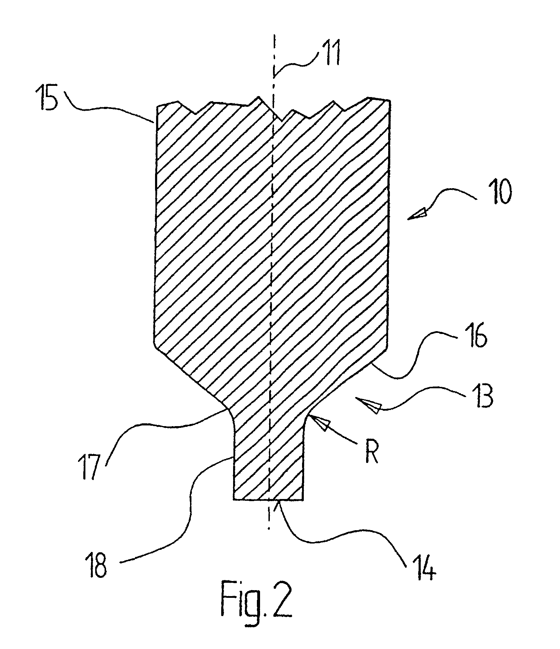

Die Kontur 13 des Fräsers 10 hat zur Achse 11 einen geringeren Abstand als ein Schaft 15 des Fräsers, wie in der Darstellung von Fig. 2 zu erkennen ist. Des weiteren kann die Kontur 13 - in einem Längsschnitt entlang der Werkzeugachse betrachtet - durch mehrere geometrische Grundformen beschrieben werden (Fig. 2). Ein erster Abschnitt der Kontur 13 besteht aus einer Geraden 16, durch die sich der Fräser 10 in Richtung auf seine Stirnfläche 14 hin verjüngt. An die Gerade 16 schliesst sich ein Kreisbogen 17 mit dem Radius R an, der wiederum in eine parallel zur Achse 11 ausgerichteten zweiten Gerade 18 übergeht. Durch den Kreisbogen 17 erhält die Kontur 13 des Fräsers einen konkaven Abschnitt.

Zur Erzeugung der Sollkontur der Verbindungsfläche 5 wird der Fräser 10 in Richtung des Pfeiles 19 an der Hauptfläche 4 entlang geführt. Durch die mit dem Pfeil 20 angedeutete Drehrichtung des Fräsers ergibt sich, dass dazu ein Gleichlauffräsverfahren verwendet wird. Es wäre jedoch ebenso möglich, die Schnittbahn mit einem Gegenlauffräsverfahren zu erzeugen.

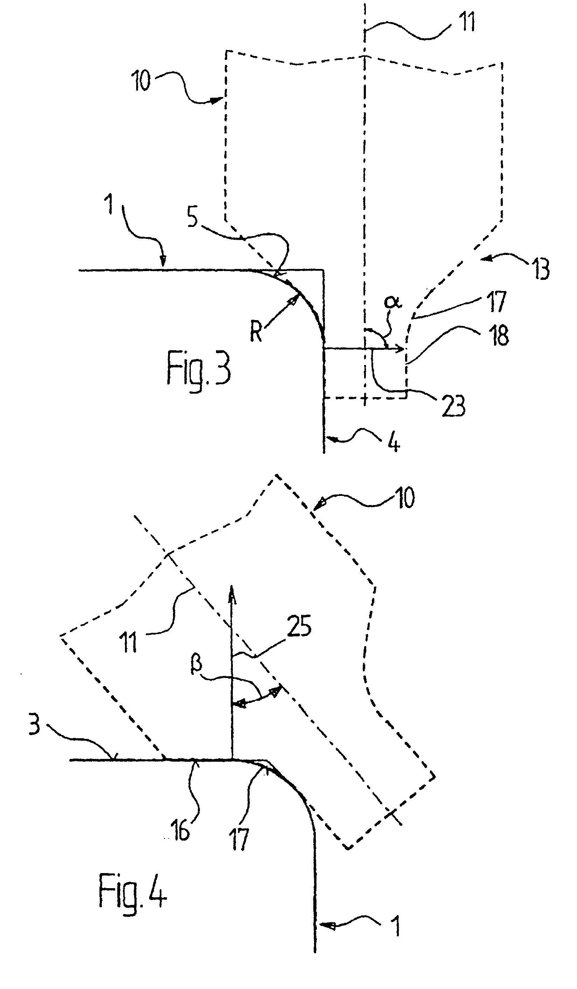

In Fig. 3 und in Fig. 4 ist jeweils in einer Frontansicht ein Ausschnitt des in Fig. 1 gezeigten Werkstückes 1 dargestellt. Dazu ist in den beiden Figuren jeweils eine momentane Ausrichtung des Fräsers während der ersten Schnittbahn (Fig. 3) und der zweiten Schnittbahn (Fig. 4) gezeigt. Ausserdem ist jeweils dargestellt, mit welcher Ausrichtung der Fräser 10 zur Erzeugung der jeweiligen Schnittbahn am Werkstück entlanggeführt wird.

In Fig. 3 ist zu erkennen, dass bei der ersten Schnittbahn der Fräser 10 mit einem ersten Abschnitt seiner Kontur 13 schneidet. Dieser Konturabschnitt setzt sich aus der Geraden 18 und dem Kreisbogen 17 zusammen. Durch die Gerade 18 wird ein Teil der Hauptfläche 4 bearbeitet, der an die Verbindungsfläche 5 angrenzt. Da der Kreisbogen 17 des Werkzeuges einen kleineren Öffnungswinkel hat als der Kreisbogen (Krümmung 6) der Verbindungsfläche 5, kann durch die erste Schnittbahn lediglich ein Teil der Sollkontur der Verbindungsfläche 5 erzeugt werden. In anderen Ausführungsformen des erfindungsgemässen Verfahrens wäre es jedoch bei dazu geeigneten Werkstücken auch möglich, eine Verbindungsfläche mit nur einer Schnittbahn vollständig zu fertigen.

Um die vorbestimmte Sollkontur der Verbindungsfläche 5 zu erzeugen, fährt der Fräser 10 auf seiner ersten Schnittbahn einen vorbestimmten Verfahrweg ab. Der Verfahrweg bestimmt sich zum einen daraus, dass ein räumlicher Winkel α zwischen einem momentanen Normalenvektor 23 zur (Sollkontur der) Verbindungsfläche 5 und der Rotationsachse 11 des Fräsers 10 während des gesamten Verfahrweges der ersten Schnittbahn konstant ist. Diese Normale 23 ist eindeutig definiert, weshalb die Schnittbahn des Fräsers 10 exakt beschrieben werden kann. Da die Verbindungsfläche 5 stetig in die Hauptfläche 4 übergehen soll, ist zur Bestimmung des Fusspunktes des Normalenvektors 23 eine (imaginäre) Ebene senkrecht zur momentanen Verfahrrichtung des Fräsers 10 zu bilden. Diese Ebene bildet zusammmen mit der Verbindungsfläche 5 eine gekrümmt verlaufende Berührungs- bzw. Schnittkurve. Der Fusspunkt des Normalenvektors 23 ist nun der an die Hauptfläche 4 angrenzende Endpunkt der Schnitt- bzw. Berührungskurve. Die zuvor erwähnte (imaginäre) Ebene entspricht auch der (imaginären) Ebene, in der die Normalenvektoren an jeden Punkt der Berührungs- bzw. Schnittkurve liegen. Unter Schnittkurve kann dabei auch die Berührungskurve verstanden werden, die sich aus dem mit seiner Krümmung - zumindest teilweise - kongruent an der Krümmung des Werkstückes anliegendem Werkzeug ergibt. Auch die auf diese Weise definierte Schnittkurve ist identisch mit der zuvor beschriebenen Berührungs- bzw. Schnittkurve.

Zum anderen bestimmt sich nun die Ausrichtung des Fräsers auf seinem Verfahrweg auch daraus, dass dessen Rotationsachse 11 auf dem Verfahrweg entlang der ersten Schnittbahn die Bedingung erfüllt, wonach sich die Rotationsachse 11 stets in der oben beschriebenen (imaginären) Ebene befindet. Im in Fig. 3 gezeigten Ausführungsbeispiel entspricht diese Ebene der Zeichenebene.

Der räumliche Winkel α ist dabei so zu wählen, dass die Gerade 18 parallel bzw. tangential zur Hauptfläche 4 ausgerichtet ist. Damit dies erfüllt werden kann, ist für den mit der Hauptfläche 4 im Eingriff stehenden Abschnitt der Kontur 13 des Fräsers 10 mit der Geraden 18 eine geometrische Form gewählt worden, die dem entsprechenden Abschnitt der Hauptfläche 4 entspricht. Da aufgrund der geometrischen Gestaltung und der Ausrichtung des Fräsers 10 sichergestellt ist, dass die Gerade während des gesamten Verfahrweges der ersten Schnittbahn parallel zur Hauptfläche 4 verläuft, ergibt sich ein stetiger Übergang der Hauptfläche 4 zur Verbindungsfläche 5. Daraus folgt nun, dass an jeder Stelle des Überganges von der Verbindungsfläche 5 zur Hauptfläche 4, die Tangentialfläche der letztgenannten der jeweiligen Tangentialfläche der Verbindungsfläche 5 entspricht. Selbstverständlich gilt auch umgekehrt, dass an jedem Punkt des Überganges die jeweilige Tangentialfläche der Verbindungsfläche gleich der Hauptfläche 4 bzw. der Tangentialfläche der Hauptfläche 4 ist. Diese Tangentialflächen können durch den bereits zuvor erwähnten Normalenvektor 23 eindeutig beschrieben werden.

Im Unterschied zu Fig. 3 befindet sich in der Darstellung von Fig. 1 der Normalenvektor nicht auf der Übergangslinie, an welcher die Hauptfläche 4 in die Verbindungsfläche 5 übergeht. In Fig. 1 wurde diese Parallelverschiebung des Normalenvektors 23 gegenüber seiner tatsächlichen Ausrichtung zur Wahrung der Übersichtlichkeit von Fig. 1 vorgenommen.

Schliesslich wäre es zur Orientierung des Fräsers grundsätzlich auch möglich andere Normalenvektoren der Fläche 5 heranzuziehen, als diejenigen, die sich jeweils auf der Übergangslinie zwischen der Verbindungsfläche 5 und der Hauptfläche 4 befinden.

In Fig. 4 ist die zweite Schnittbahn des Fräsers 10 dargestellt. Wie zu erkennen ist, liegt hierzu der Fräser 10. mit seiner Geraden 16 an der Hauptfläche 3 der Sollkontur der Freiformfläche 2 an. Auch hier liegt der Kreisbogen 17 der Kontur 13 mit seiner vollständigen Länge an der Sollkontur der Verbindungsfläche 5 an. Der Öffnungswinkel des Kreisbogens 17 ist so gewählt, dass zwischen der ersten und der zweiten Schnittbahn eine geringe Überdeckung stattfindet. Dadurch kann vermieden werden, dass zwischen den beiden Schnittbahnen ein Grat stehenbleibt. Selbstverständlich könnte dies auch dadurch erreicht werden, dass die beiden Schnittbahnen exakt aneinanderstossen.

Die Ausrichtung des Fräsers 10 während seines Verfahrweges entlang der zweiten Schnittbahn ist ebenfalls durch Flächennormalen zur Verbindungsfläche eindeutig vorbestimmt. Auch in diesem Fall ist der Fräser so zu führen, dass eine Tangentialfläche an den Kreisbogen 17 einer Tangentialfläche der Hauptfläche 3 entspricht. Die beiden Tangentialflächen sind dazu jeweils an dem Punkt entlang der Linie anzulegen, an denen die Hauptfläche 3 und die Verbindungsfläche 5 aneinanderstossen und den der Fräser 10 auf seinem Verfahrweg entlang der zweiten Schnittbahn zu dem betrachteten Zeitpunkt momentan berührt. Auch hier ist somit ein Normalenvektor 25 eindeutig bestimmt, wobei ein konstanter räumlicher Winkel β zwischen dem jeweiligen Normalenvektor 25 und der Achse 11 während des gesamten Verfahrweges der zweiten Schnittbahn eingehalten wird.

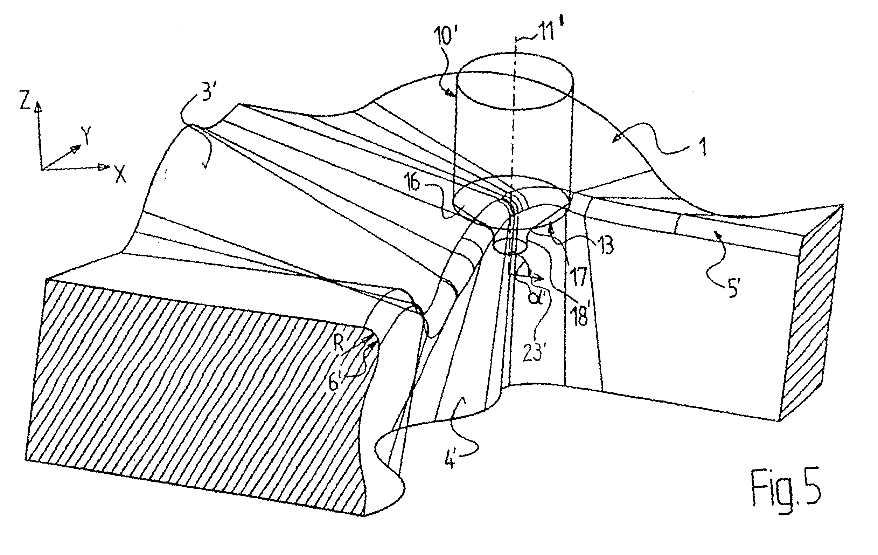

In Fig. 5 ist ein gegenüber Fig. 1 im wesentlichen identisches weiteres Ausführungsbeispiel des erfindungsgemässen Verfahrens gezeigt. Aus diesem Grund sind gleiche Elemente mit gleichen Bezugszeichen versehen. Das in Fig. 5 dargestellte Werkstück 1 weist Hauptflächen 3' und 4' auf, die mit einer konkaven bzw. konvexen Krümmung, jeweils in einer Richtung parallel zur Zeichenebene, versehen sind. Da auch hier die mit einer kreisförmigen Krümmung 6' versehene Verbindungsfläche 5' stetig und damit tangential in die jeweilige Hauptfläche 3', 4' übergeht, ist bei diesem Werkstück die Krümmung 6' mit einem gegenüber dem zuvor beschriebenen Ausführungsbeispiel etwas grösseren Öffnungswinkel versehen.

Der Fräser 10' weist an seiner Schneidfläche im wesentlichen die gleiche Kontur 13 und somit auch den gleichen Radius 17 wie der Fräser 10 auf. Lediglich die Gerade 18' ist im Vergleich zur Geraden 18 etwas kürzer. Der Verfahrweg und die Ausrichtung des Fräsers 10' bestimmt sich entsprechend den in Verbindung mit dem Fräser 10 beschriebenen Bedingungen. Damit auch hier stetige und damit knickfreie Übergänge zwischen der Verbindungsflache 5' und den beiden Hauptflächen 3',4' erzeugt werden können, ist die Rotationsachse 11 anders zu orientiern. Bei der in Fig. 5 gezeigten Bearbeitung der ersten Schnittbahn ist deshalb die Rotationsachse 11' in der Zeichenebene in Uhrzeigerrichtung gekippt, so dass sich ein konstanter räumlicher Winkel α' mit der Rotationsachse 11' ergibt. Auch hier liegt die Kontur des Fräsers 10' mit dem Kreisbogen 17 kongruent so an der Krümmung 6' der Verbindungsfläche an, dass dadurch die Gerade 18' tangential zur Verbindungsfläche 5' und der Hauptfläche 4' verläuft. Ebenso wie bei der Darstellung von Fig. 1 ist auch bei Fig. 5 der Normalenvektor 23' gegenüber seiner tatsächlichen Ausrichtung parallelvorschoben dargestellt, damit die Übersichtlichkeit der Darstellung gewahrt bleibt.

Auf der zweiten (nicht dargestellten) Schnittbahn ist hingegen, aufgrund des Verlaufs der Hauptfläche 3', der Fräser - im Vergleich - zu der in Fig. 4 gezeigten Schnittbahn - weniger stark in Gegenuhrzeigerrichtung geneigt. Dadurch ist die Gerade 16 an jeder Stelle des Verfahrweges des Fräsers 10' tangential zur Hauptfläche 3' ausgerichtet.

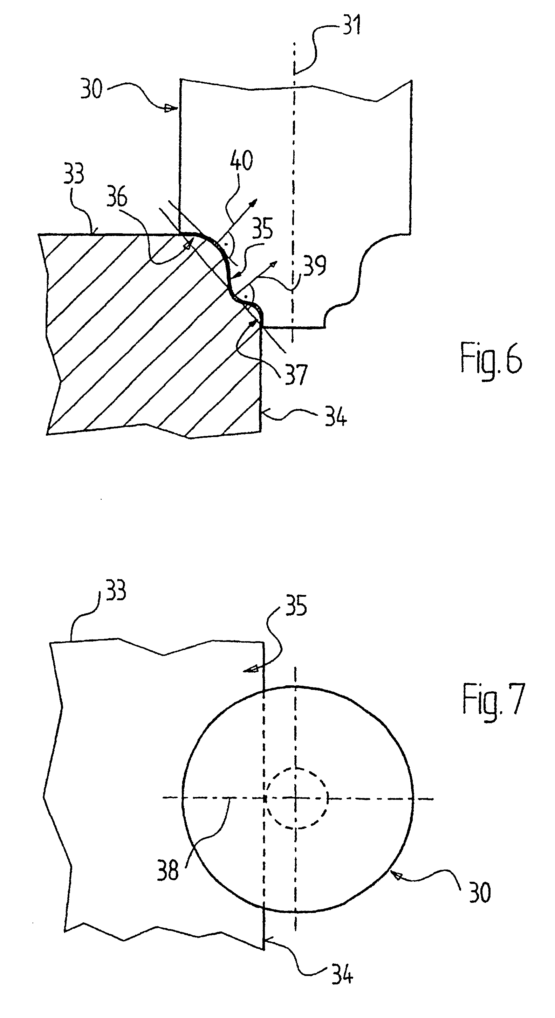

In Fig. 6 ist noch ein weiteres Ausführungsbeispiel gezeigt, in dem die Verbindungsfläche 35 eines Werkstückes mit nur einer Schnittbahn gefertigt werden kann. Um die Verbindungsfläche 35 zu erzeugen, wird das Werkstück entlang den Kanten zweier Hauptflächen 33, 34 mit einem rotationssymmetrischen Formfräser 30 bearbeitet. Die in Fig. 6 gezeigte momentane Verfahrrichtung des Fräsers 30 verläuft orthogonal zur Zeichenebene. Wie zu erkennen ist, ist die Verbindungsfläche 35 - in der gezeigten Querschnittsansicht - eine mehrfach und in unterschiedliche Richtungen gekrümmte Fläche. Insgesamt verläuft die Verbindungsfläche 35 zwischen den beiden Hauptflächen 33, 34 hauptsächlich konvex.

Daraus folgt, dass die Kontur des Formfräser ebenfalls hauptsächlich konvex und zur Verbindungsfläche 35 vollständig kongruent ausgebildet ist. Die im Bereich der Kontur flächig mit Schneiden besetzte Mantelfläche des Fräsers 30 liegt mit ihren Endstücken 36, 37 jeweils so an dem Werkstück an, dass die Endstücke 36, 37 tangential zu den Hauptflächen 33, 34 verlaufen. Da die Schnittebene der Darstellung von Fig. 6 sowohl durch die Rotationsachse 31 als auch durch die Berührungskurve 38 (Fig. 7) des Fräsers 30 mit der Sollkontur des Werkstückes verläuft, können auch beispielhaft zwei Vektoren 39, 40 der Normalenvektorenschar der Berührungskurve 38 gezeigt werden. Die Normalenvektoren zu der jeweiligen Berührungskurve liegen alle in einer gemeinsamen Ebene, nämlich der oben bereits erwähnten jeweiligen (imaginären) Ebene. Die Rotationsachse 31 des Fräsers 30 befindet sich an jeder Stelle des Verfahrweges in der jeweiligen momentanen (imaginären) Ebene.

Durch die zuvor beschriebene Ausrichtung des Fräsers anhand von Flächennormalen können nicht nur vordefinierte stetige Übergänge von Verbindungsflächen zu Hauptflächen einer Freiformfläche erzeugt werden. Diese Ausrichtung anhand jeweils eines bestimmten Normalenvektors kann auch die Ausarbeitung von NC-Programmen erheblich erleichtern, die mit Hilfe eines NC-Programmiersystems erstellt werden.

Die geometrische Form einer Freiformfläche ist in der Regel durch ein CAD-System, beispielsweise mit Hilfe von Bezier-Kurven oder durch NURBS (Non Uniform Rational B Splines), eindeutig beschrieben. Damit ist es auch möglich, an jedem Punkt der Sollkontur der Freiformfläche die Tangentialfläche zu bilden, die wiederum im CAD-System durch ihren Normalenvektor definiert werden kann. Mit Hilfe eines NC-Programmiersystems, das die geometrischen Daten der Freiformfläche übernehmen kann, ist es somit möglich, die Fusspunkte der Normalenvektoren zu bestimmen, die für die Ausrichtung des Werkzeuges herangezogen werden. Die Summe dieser Fusspunkte bildet eine Linie, entlang welcher der Fräser mit einem bestimmten Punkt seiner Kontur zu bewegen ist. Dieser Punkt ist so zu wählen, dass sich zusammen mit der Linie der Fusspunkte die gewünschte Orientierung des Fräsers ergibt. Damit ist der Verfahrweg des Fräsers eindeutig bestimmt und kann durch das NC-Programmiersystem exakt generiert werden.

Obwohl das erfindungsgemässe Verfahren bevorzugt als Fräsverfahren eingesetzt wird, kann es selbstverständlich auch in Verbindung mit jedem anderen abtragenden Bearbeitungsverfahren, wie beispielsweise dem Schleifen oder Erodieren, verwendet werden.

## Patentansprüche

1. Verfahren zur Erzeugung einer Verbindungsfläche (5) durch eine mindestens fünfachsige Werkzeugmaschine, wobei die Verbindungsfläche (5, 5', 35) eines Werkstückes mindestens zwei Hauptflächen (3, 4; 3', 4'; 33, 34) miteinander verbindet und zumindest zwei Krümmungen (6; 7, 7', 7'') in unterschiedliche Richtungen aufweist, bei welchem
ein Werkzeug verwendbar ist, welches eine Mantelfläche (12) aufweist, die mit einer rotationssymmetrischen Kontur (13) versehen ist, an welcher mindestens eine Schneide angeordnet ist,
die Kontur (13) in bezug auf einen Längsschnitt entlang der Rotationsachse (11) des Werkzeuges zumindest einen Abschnitt hat, der zumindest mit einem Abschnitt einer der beiden Krümmungen (6) der Verbindungsfläche (5) kongruent ist,
das Werkzeug zur Erzeugung der Verbindungsfläche (5, 5', 35) in Richtung (19) einer Längserstreckung der Verbindungsfläche (5, 5', 35) führbar ist, so dass das Werkzeug mit dem Werkstück in Eingriff steht,
die Ausrichtung des Werkzeuges anhand einer von dem Verlauf der Verbindungsflächen (5, 5', 35) abhängigen geometrischen Grösse so erfolgt, dass diese Grösse als im wesentlichen konstant einstellbar ist und aufgrund dieser Ausrichtung eine Tangentialfläche der Kontur (13) des Werkzeuges mit einer Tangentialfläche einer der Hauptflächen (3, 4, 3', 4') identisch ist.

2. Verfahren nach Anspruch 1, bei welchem die geometrische Grösse während des gesamten Verfahrweges des Werkzeuges auf einer Schnittbahn entlang der Verbindungsfläche (5) als im wesentlichen konstant einstellbar ist.

3. Verfahren nach einem oder beiden der vorhergehenden Ansprüche, bei welchem die geometrische Grösse ein von der Rotationsachse (11) des Werkzeuges mit einem Normalenvektor (23, 25, 23') der Verbindungsfläche (5, 5') eingeschlossener räumlicher Winkel (α, β, α') ist.

4. Verfahren nach Anspruch 3, bei welchem sich der Normalenvektor (23, 25, 23') auf einer Berührungs- bzw. Schnittkurve zwischen der Verbindungsfläche (5, 5') und der Kontur (13) des Werkzeuges befindet.

5. Verfahren nach einem oder mehreren der vorhergehenden Ansprüche, bei welchem die Rotationsachse (11) so ausrichtbar ist, dass sie sich in einer Ebene befindet, in der auch Normalenvektoren (39, 40) einer Berührungskurve (38) zwischen dem Werkzeug und der Sollkontur der Verbindungsfläche (5, 5', 35) liegen.

6. Verfahren nach einem der vorhergehenden Ansprüche, bei welchem das sich im Eingriff befindende Werkzeug in einer Längsrichtung der Verbindungsfläche (5, 5', 35) an dieser so entlang geführt wird, dass sich das Werkzeug auch zumindest mit einem Abschnitt einer der Hauptflächen (3, 4, 3', 4'; 33, 34) im Eingriff befindet.

7. Verfahren nach einem oder mehreren der vorhergehenden Ansprüche, bei welchem die Kontur (13) des Werkzeuges so gestaltet ist, dass eine in eine Längsrichtung konvex gekrümmte Verbindungsfläche (5, 5', 35) erzeugbar ist.

8. Verfahren nach einem oder mehreren der vorhergehenden Ansprüche, bei welchem die Kontur (13) einen hauptsächlich konkav gekrümmten Abschnitt aufweist.

9. Verwendung des Verfahrens nach einem oder mehreren der vorhergehenden Ansprüchen, zur Erzeugung maschinenlesbarer Daten, wobei die Daten einem Verfahrweg des Werkzeuges an der Verbindungsfläche (5) entsprechen.

## Claims

1. Method of producing a connecting surface (5) by an at least five-axis machine tool, the connecting surface (5, 5', 35) of a workpiece connecting at least two main surfaces (3, 4; 3', 4'; 33, 34) to one another and having at least two curvatures (6; 7, 7', 7'') in different directions, in which method
a tool can be used which has a surface (12) which is provided with a rotationally symmetrical contour (13) on which at least one cutting edge is arranged,
the contour (13), with regard to a longitudinal section along the rotation axis (11) of the tool, has at least one section which is at least congruent with a section of one of the two curvatures (6) of the connecting surface (5),
the tool for producing the connecting surface (5, 5', 35) can be guided in a direction (19) of a longitudinal extent of the connecting surface (5, 5', 35), so that the tool is in engagement with the workpiece,
the orientation of the tool with reference to a geometrical variable dependent upon the profile of the connecting surfaces (5, 5', 35) is effected in such a way that this variable can be set to be essentially constant, and, on account of this orientation, a tangential surface of the contour (13) of the tool is identical to a tangential surface of one of the main surfaces (3, 4, 3', 4').

2. Method according to Claim 1, in which the geometrical variable can be set to be essentially constant during the entire traverse of the tool on a cutting path along the connecting surface (5).

3. Method according to one or both of the preceding claims, in which the geometrical variable is a spatial angle (α, β, α') enclosed between the rotation axis (11) of the tool and a normal vector (23, 25, 23') of the connecting surface (5, 5').

4. Method according to Claim 3, in which the normal vector (23, 25, 23') is located on a contact or cutting curve respectively between the connecting surface (5, 5') and the contour (13) of the tool.

5. Method according to one or more of the preceding claims, in which the rotation axis (11) can be oriented in such a way that it is located in a plane in which normal vectors (39, 40) of a contact curve (38) between the tool and the desired contour of the connecting surface (5, 5', 35) also lie.

6. Method according to one of the preceding claims, in which the tool in engagement is guided in a longitudinal direction of the connecting surface (5, 5', 35) along the latter in such a way that the tool is also in engagement at least with a section of one of the main surfaces (3, 4, 3', 4'; 33, 34).

7. Method according to one or more of the preceding claims, in which the contour (13) of the tool is configured in such a way that a connecting surface (5, 5', 35) convexly curved in a longitudinal direction can be produced.

8. Method according to one or more of the preceding claims, in which the contour (13) has a mainly concavely curved section.

9. Use of the method according to one or more of the preceding claims for producing machine-readable data, the data corresponding to a traverse of the tool at the connecting surface (5).

## Revendications

1. Procédé pour l'obtention d'une surface de liaison (5) à l'aide d'une machine d'usinage comportant au moins cinq axes, dans lequel la surface de liaison (5, 5', 35) d'une pièce à usiner relie l'une à l'autre au moins deux surfaces principales (3, 4 ; 3', 4' ; 33, 34) est présent au moins deux courbures (6 ; 7, 7', 7") dans des directions différentes, dans lequel
on utilise un outil qui présente une surface latérale (12) qui est munie d'un contour (13) symétrique en rotation, contre lequel est disposée au moins une lame,
le contour (13), par rapport à une découpe longitudinale le long de l'axe de rotation (11) de l'outil, possède au moins une section qui manifeste une congruence avec une section d'une des deux courbures (6) de la surface de liaison (5),
l'outil, pour l'obtention de la surface de liaison (5, 5', 35), peut être guidé dans la direction (19) de l'étendue longitudinale de la surface de liaison (5, 5', 35) de telle sorte que l'outil entre en contact avec la pièce à usiner,
la mise en alignement de l'outil a lieu à l'aide d'une valeur géométrique qui dépend de l'allure des surfaces de liaison (5, 5', 35), de telle sorte que cette valeur peut être réglée de manière essentiellement constante et, sur base de cette mise en alignement, une surface tangentielle du contour (13) de l'outil est identique à une surface tangentielle d'une des surfaces principales (3, 4, 3', 4').

2. Procédé selon la revendication 1, dans lequel la valeur géométrique peut être réglée de manière essentiellement constante tout au long du déplacement de l'outil sur une voie de coupe le long de la surface de liaison (5).

3. Procédé selon l'une quelconque des revendications précédentes ou les deux, dans lequel la valeur géométrique est un angle solide inclus (α, β, α') formé entre l'axe de rotation (11) de l'outil et un vecteur de perpendicularité (23, 25, 23') de la surface de liaison (5, 5').

4. Procédé selon la revendication 3, dans lequel le vecteur de perpendicularité (23, 25, 23') se trouve sur une courbe de contact, respectivement de coupe entre la surface de liaison (5, 5') et le contour (13) de l'outil.

5. Procédé selon une ou plusieurs des revendications précédentes, dans lequel l'axe de rotation (11) peut être mis en alignement de telle sorte qu'il se trouve dans un plan dans lequel se trouvent également les vecteurs de perpendicularité (39, 40) d'une courbe de contact (38) entre l'outil et le contour de consigne de la surface de liaison (5, 5', 35).

6. Procédé selon l'une quelconque des revendications précédentes, dans lequel l'outil entrant en contact est guidé dans la direction longitudinale de la surface de liaison (5, 5', 35) sur cette dernière de telle sorte que l'outil entre également en contact au moins avec une section d'une des surfaces principales (3, 4, 3', 4' ; 33, 34).

7. Procédé selon une ou plusieurs des revendications précédentes, dans lequel le contour (13) de l'outil est réalisé de telle sorte que l'on peut obtenir une surface de liaison (5, 5', 35) qui présente une courbure convexe en direction longitudinale.

8. Procédé selon une ou plusieurs des revendications précédentes, dans lequel le contour (13) présente une section possédant une courbure principalement concave.

9. Utilisation du procédé selon une ou plusieurs des revendications précédentes, pour l'obtention de données exploitables par une machine, dans laquelle les données correspondent au déplacement de l'outil le long de la surface de liaison (5).
